# EUROPEAN PATENT APPLICATION

(11) **EP 4 576 553 A1**
(43) Date of publication of application: **25.06.2025**
(21) Application number: 22955694.9
(22) Date of filing: 17.08.2022
(51) Int. Cl.: H02M 7/49

(54) **POWER CONVERSION DEVICE**

(71) Applicant: MITSUBISHI ELECTRIC CORPORATION, Chiyoda-ku Tokyo 100-8310 (JP)
(72) Inventor: NAKAYAMA, Akito, Tokyo 100-8310 (JP)
(74) Representative: Hoffmann Eitle
(86) International application number: PCT/JP2022/031087
(87) International publication number: WO 2024/038520

(57) **Abstract**

This power conversion device includes: a power converter (10) including a plurality of arms having a plurality of unit converter groups (120) connected in series, each unit converter group (120) having a plurality of unit converters (122) connected to each other; and a control device (20). Each unit converter (122) includes switching elements (SWp, SWn). Each unit converter group (120) includes a gate control section (126) including a carrier wave generation section (1262), and performs ON/OFF control of the switching elements (SWp, SWn) by comparing a modulation command (k_{ref}) from the control device (20) and carrier waves (k_{car}). The phases of the carrier waves (k_{car}) corresponding to the unit converters (122) are shifted by a first phase shift amount obtained by equally dividing one cycle (2π) of the carrier waves (k_{car}) by the number (M) of the unit converters (122) in the unit converter group (120), and among the unit converter groups in the arm, the phases are shifted by a second phase shift amount (φb) obtained by equally dividing the first phase shift amount (φa) by the number of the unit converter groups in the arm.

## Description

### TECHNICAL FIELD

The present disclosure relates to a power conversion device.

### BACKGROUND ART

As a voltage-sourced power conversion device used in a DC power transmission system, there is known a modular multilevel converter. The modular multilevel converter is used for conversion from three-phase AC to DC or conversion opposite thereto. The modular multilevel converter includes a plurality of sub modules in each of which a plurality of cells having capacitors and switching elements are connected in series. If large amounts of harmonic components are included in voltage and current of an AC voltage grid to which the modular multilevel converter is connected, voltage balance among the capacitors is lost and waveform distortion of synthesized AC voltage increases.

In this regard, the following technology is known. On the basis of phase information of a plurality of cells and unique information of each cell, a carrier wave for controlling ON/OFF operation of a switching element in each cell is generated, and the switching elements of the cells composing each sub module perform ON/OFF operations by carrier waves having different phases (see, for example, Patent Document 1).

In the technology disclosed in Patent Document 1, for the cells in one sub module in which the plurality of cells are connected in series, ON/OFF operations are performed on the basis of carrier waves having different phases, whereby waveform distortion can be reduced. In addition, since it is only necessary to generate carrier waves with phases shifted from each other, the configuration of a control device can be simplified, thus contributing to device size reduction.

### CITATION LIST

### PATENT DOCUMENT

Patent Document 1: Japanese Laid-Open Patent Publication No. 2019-75844

### SUMMARY OF THE INVENTION

### PROBLEM TO BE SOLVED BY THE INVENTION

Meanwhile, for adapting to large-capacity power conversion, there is known a modular multilevel converter configured such that cell groups having cells connected in series are included in each sub module. In Patent Document 1, a carrier wave is generated for each cell group in one sub module, and carrier waves having different phases are transmitted to a plurality of cell groups in one sub module (see embodiment 3 in Patent Document 1). The carrier waves for the cells in each cell group are all equal and thus the data amount is reduced. However, since carrier waves having equal phases are present in one sub module, switching elements operating by the carrier waves having equal phases might increase harmonic distortion. In order to solve this problem, it is conceivable that carrier waves with phases shifted from each other are generated for the cells in the sub module, but such a method causes increase in the data amount of carrier waves, increase in the calculation amount, and the like, resulting in size increase of the control device.

The present disclosure has been made to solve the above problem, and an object of the present disclosure is to provide a power conversion device that includes a modular multilevel converter adaptable to large-capacity power conversion and can output voltage and current with reduced harmonic distortion, using a simple configuration, without size increase of a control device.

### MEANS TO SOLVE THE PROBLEM

A power conversion device according to the present disclosure includes: a power converter including a plurality of arms each having a plurality of unit converter groups connected in series, each unit converter group having a plurality of unit converters connected to each other; and a control device which controls the power converter. Each unit converter includes a series body having two switching elements connected in series, and a capacitor connected in parallel to the series body. Each unit converter group includes a gate control section which generates gate signals for performing ON/OFF control of a plurality of the switching elements in the unit converter group. The gate control section includes a carrier wave generation section which generates a plurality of carrier waves corresponding to a number of the unit converters in the unit converter group, and a gate signal generation section which compares a modulation command received from the control device and each carrier wave generated by the carrier wave generation section, and generates the gate signals on the basis of a result of the comparison. The plurality of carrier waves to be generated by the carrier wave generation section are generated such that phases thereof are each shifted by a first phase shift amount which is a value obtained by equally dividing one cycle of the carrier waves by the number of the unit converters in the unit converter group, using a carrier wave reference phase received from the control device as a reference, and among the unit converter groups in each arm, the phases are each shifted by a second phase shift amount which is a value obtained by equally dividing the first phase shift amount by a number of the unit converter groups in the arm, using the carrier wave reference phase received from the control device as a reference.

### EFFECT OF THE INVENTION

The power conversion device according to the present disclosure can output voltage and current with reduced harmonic distortion, using a simple configuration, without size increase of a control device.

### BRIEF DESCRIPTION OF THE DRAWINGS

[FIG. 1] FIG. 1 is a schematic diagram showing the configuration of a power conversion device according to embodiment 1.
[FIG. 2] FIG. 2 is a schematic configuration diagram of one arm composing the power conversion device according to embodiment 1.
[FIG. 3] FIG. 3 shows the configuration of a unit converter.
[FIG. 4] FIG. 4 is a configuration diagram showing an example of a unit converter group composing an arm.
[FIG. 5] FIG. 5 is another configuration diagram showing an example of a unit converter group composing an arm.
[FIG. 6] FIG. 6 is still another configuration diagram showing an example of a unit converter group composing an arm.
[FIG. 7] FIG. 7 shows the configuration of a gate control section that the unit converter group has.
[FIG. 8] FIG. 8 shows another configuration of a gate control section that the unit converter group has.
[FIG. 9] FIG. 9 illustrates phase shift of carrier waves in the unit converter group.
[FIG. 10] FIG. 10 illustrates phase shift of carrier waves among the unit converter groups in one arm.
[FIG. 11] FIG. 11 illustrates carrier waves in a power conversion device according to embodiment 2.
[FIG. 12] FIG. 12 shows the configuration of a gate control section according to embodiment 2.
[FIG. 13] FIG. 13 is a configuration diagram showing an example of a unit converter group composing an arm according to embodiment 2.
[FIG. 14] FIG. 14 is a hardware configuration diagram showing an example of the control device and the gate control section according to each embodiment.

### DESCRIPTION OF EMBODIMENTS

Hereinafter, embodiments will be described with reference to the drawings. In the drawings, the same reference characters denote the same or corresponding parts.

Hereinafter, with reference the drawings, embodiments of the present disclosure will be described in detail.

### Embodiment 1

Hereinafter, a power conversion device according to embodiment 1 will be described with reference to the drawings.

### <Configuration of power conversion device>

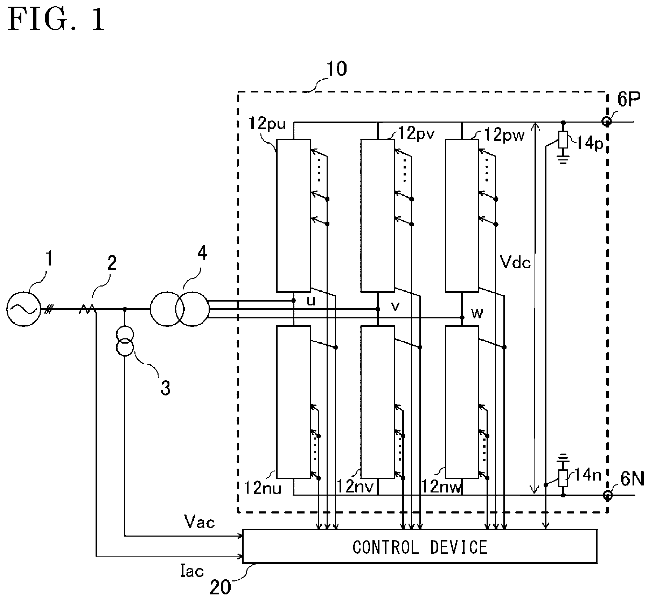

FIG. 1 shows a schematic configuration of a power conversion device called a modular multilevel converter (MMC) according to embodiment 1. In FIG. 1, the power conversion device includes a power converter 10 and a control device 20 which controls the power converter 10, and performs power conversion between AC and DC. The power converter 10 is connected between an AC power supply 1 which is a three-phase AC grid and a power device, a DC power supply, another power converter, or the like which is supplied with DC power via a positive-side DC terminal 6P and a negative-side DC terminal 6N as a DC grid. The power device, the DC power supply, the other power converter, or the like which is supplied with DC power, is not shown. A current sensor 2, a voltage sensor 3, a transformer 4, and the like are connected between the AC power supply 1 and the power converter 10, and AC current Iac detected by the current sensor 2 and AC voltage Vac detected by the voltage sensor 3 are outputted to the control device 20. Voltage sensors 14p, 14n for detecting DC voltage Vdc are provided to the DC grid.

The power converter 10 has three leg circuits corresponding to u phase, v phase, and w phase of the three-phase AC, and the three leg circuits are connected in parallel between the positive-side DC terminal 6P and the negative-side DC terminal 6N.

The leg circuit for u phase is formed of a positive-side u-phase arm 12pu and a negative-side u-phase arm 12nu connected in series. One end of the positive-side u-phase arm 12pu is connected to the positive-side DC terminal 6P, one end of the negative-side u-phase arm 12nu is connected to the negative-side DC terminal 6N, and a connection point u between the positive-side u-phase arm 12pu and the negative-side u-phase arm 12nu is connected to a u-phase terminal of the transformer 4.

The leg circuit for v phase is formed of a positive-side v-phase arm 12pv and a negative-side v-phase arm 12nv connected in series. One end of the positive-side v-phase arm 12pv is connected to the positive-side DC terminal 6P, one end of the negative-side v-phase arm 12nv is connected to the negative-side DC terminal 6N, and a connection point v between the positive-side v-phase arm 12pv and the negative-side v-phase arm 12nv is connected to a v-phase terminal of the transformer 4.

The leg circuit for w phase is formed of a positive-side w-phase arm 12pw and a negative-side w-phase arm 12nw connected in series. One end of the positive-side w-phase arm 12pw is connected to the positive-side DC terminal 6P, one end of the negative-side w-phase arm 12nw is connected to the negative-side DC terminal 6N, and a connection point w between the positive-side w-phase arm 12pw and the negative-side w-phase arm 12nw is connected to a w-phase terminal of the transformer 4.

### <Configuration of arm 12>

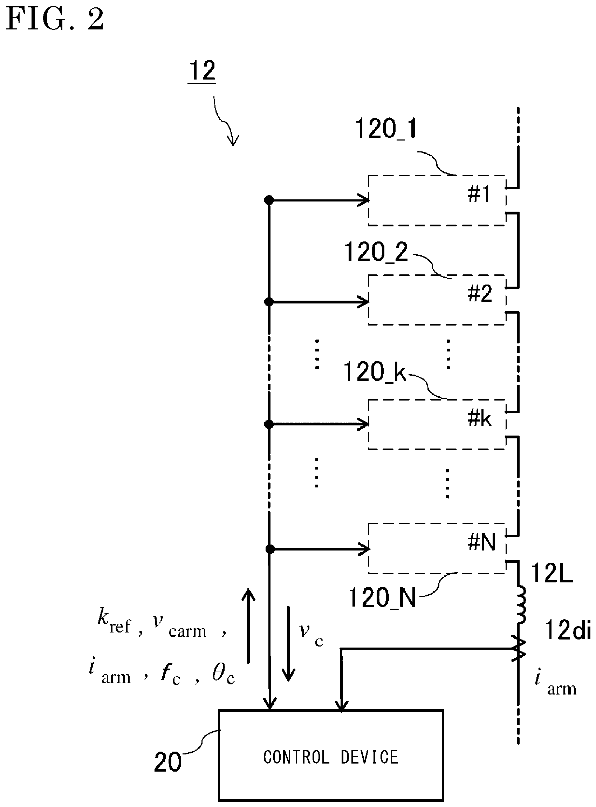

Next, the configuration of each arm of the power converter 10 will be described with reference to FIG. 2.

FIG. 2 shows a schematic configuration of an arm 12 (when the arms are collectively mentioned or when any of the arms is mentioned, the arm(s) is referred to as arm 12). In the drawing, the arm 12 is one of six arms shown in FIG. 1.

In FIG. 2, the arm 12 includes N unit converter groups 120_1, ..., 120_k, ..., 120_N (N is an integer not less than 2) (when the unit converter groups are collectively mentioned, they are referred to as unit converter groups 120), a reactor 12L connected in series to the unit converter groups 120, and a current sensor 12di for detecting current iₐᵣₘ in the arm. In a case where the arm 12 is the positive-side u-phase arm 12pu in FIG. 1, one end of the unit converter group 120_1 is connected to the positive-side DC terminal 6P, and another end is connected to the unit converter group 120_2. One end of the unit converter group 120_N is connected to the unit converter group 120_N - 1, and another end is connected to the connection point u via the reactor 12L and the current sensor 12di for detecting the current iₐᵣₘ in the arm.

A voltage value vc of a capacitor of a unit converter included in the unit converter group 120 described later or a sum Σvc of capacitor voltage values of unit converters in the unit converter group 120, and a turn-on signal for a bypass switch provided in the unit converter group 120 described later, are transmitted from the unit converter group 120 to the control device 20.

An arm modulation command k_{ref}, a capacitor voltage average value vcₐᵣₘ in the arm, an arm current detection value iₐᵣₘ, a carrier wave reference phase θc, and a carrier wave frequency fc are transmitted from the control device 20 to the unit converter group 120.

### <Configuration of unit converter>

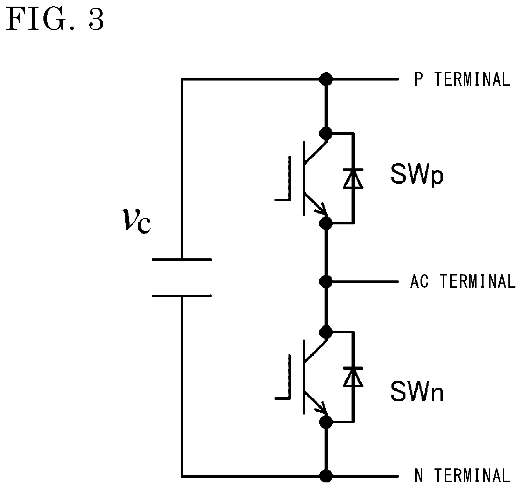

Next, the configuration of the unit converter included in the unit converter group 120 will be described with reference to FIG. 3.

FIG. 3 is a circuit diagram showing an example of the configuration of the unit converter. The unit converter includes a series body having semiconductor switching elements SWp, SWn connected in series as an example of switching elements, and a DC capacitor as an energy storage element connected in parallel to the series body. Although not shown, the unit converter further includes a voltage sensor for detecting the voltage vc of the DC capacitor described later, and a gate driver for performing ON/OFF control of the P-side semiconductor switching element SWp and the N-side semiconductor switching element SWn.

### <Configuration of unit converter group 120>

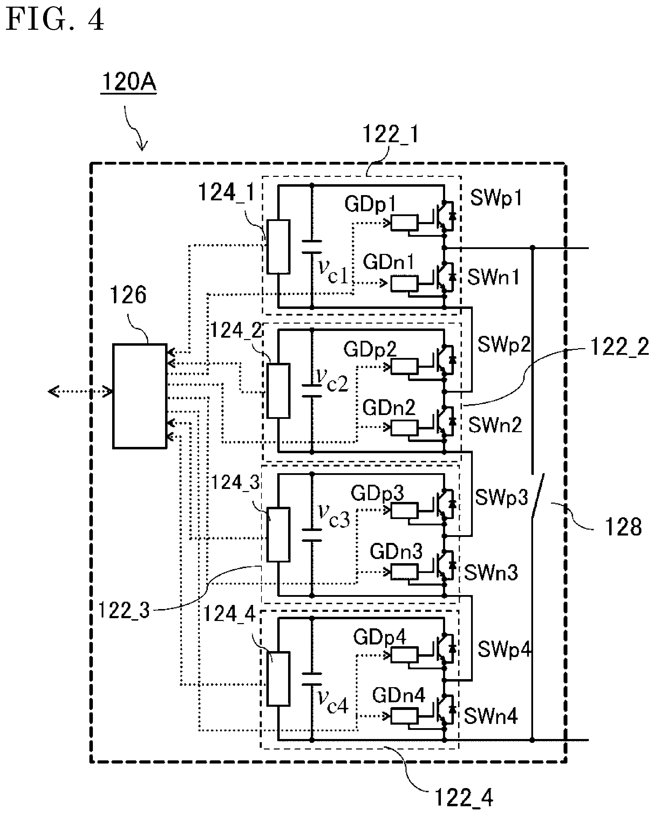

Next, the configuration of the unit converter group 120 will be described with reference to FIG. 4 to FIG. 6.

FIG. 4 to FIG. 6 are configuration diagrams showing examples of the unit converter groups composing the arm. In these examples, a number M of the unit converters in the unit converter group is 4 (M is an integer not less than 2).

### <1. Configuration of unit converter group 120A>

In FIG. 4, a unit converter group 120A includes four unit converters 122_1, 122_2, 122_3, 122_4 (when the unit converters are collectively mentioned, they are referred to as unit converters 122) connected in series, and the unit converters 122 include voltage sensors 124_1, 124_2, 124_3, 124_4 (when the voltage sensors are collectively mentioned, they are referred to as voltage sensors 124) for detecting voltages vci of their respective capacitors (i is an integer from 1 to M; here, M is 4 and vci is voltage of the capacitor that the ith unit converter has). The unit converter group 120A includes a gate control section 126 which receives the voltages vci of the capacitors detected by the respective voltage sensors 124 and generates gate signals for driving the semiconductor switching elements SWpi, SWni that the unit converters 122 have. One gate control section 126 is provided for each unit converter group.

An AC terminal of the unit converter 122_1 located at one end in the unit converter group 120A is one terminal of the unit converter group 120A. An N terminal of the unit converter 122_1 is connected to an AC terminal of the unit converter 122_2, an N terminal of the unit converter 122_2 is connected to an AC terminal of the unit converter 122_3, and an N terminal of the unit converter 122_3 is connected to an AC terminal of the unit converter 122_4. An N terminal of the unit converter 122_4 located at another end in the unit converter group 120A is another terminal of the unit converter group 120A. A bypass switch 128 is provided between the terminals of the unit converter group 120A, i.e., between the AC terminal of the unit converter 122_1 and the N terminal of the unit converter 122_4. For example, in a case where the unit converter group 120A has failed, the bypass switch 128 is turned on (closed), so that current does not flow through the unit converter group 120A and thus the unit converter group 120A can be separated from the power conversion device.

Gate drivers GDpi, GDni are provided for the semiconductor switching elements SWpi, SWni of the unit converter 122_i, and receive gate signals giP, giN transmitted from the gate control section 126, to perform ON/OFF control of the semiconductor switching elements SWpi, SWni. Through ON/OFF control, voltage outputted from the unit converter 122_i becomes the capacitor voltage vci or 0.

### <2. Configuration of unit converter group 120B>

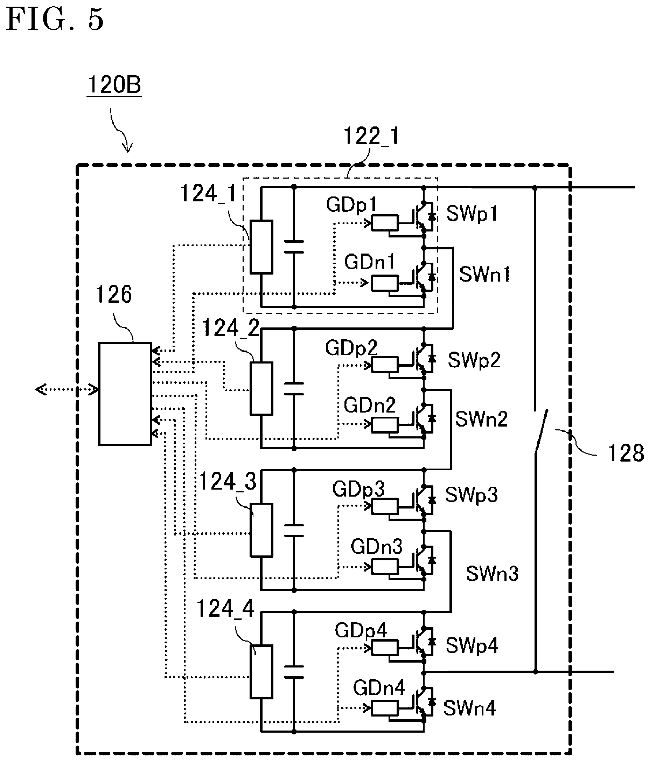

In FIG. 5, reference characters of the unit converters are not shown, but four unit converters 122_1, 122_2, 122_3, 122_4 are connected in series also in FIG. 5. Difference from the configuration in FIG. 4 is connection parts between the unit converters. In FIG. 5, a P terminal of the unit converter 122_1 located at one end in a unit converter group 120B is one terminal of the unit converter group 120B. An AC terminal of the unit converter 122_1 is connected to a P terminal of the unit converter 122_2, an AC terminal of the unit converter 122_2 is connected to a P terminal of the unit converter 122_3, and an AC terminal of the unit converter 122_3 is connected to a P terminal of the unit converter 122_4. An AC terminal of the unit converter 122_4 located at another end in the unit converter group 120B is another terminal of the unit converter group 120B. As in FIG. 4, a bypass switch 128 is provided between the terminals of the unit converter group 120B, i.e., between the P terminal of the unit converter 122_1 and the AC terminal of the unit converter 122_4.

### <3. Configuration of unit converter group 120C>

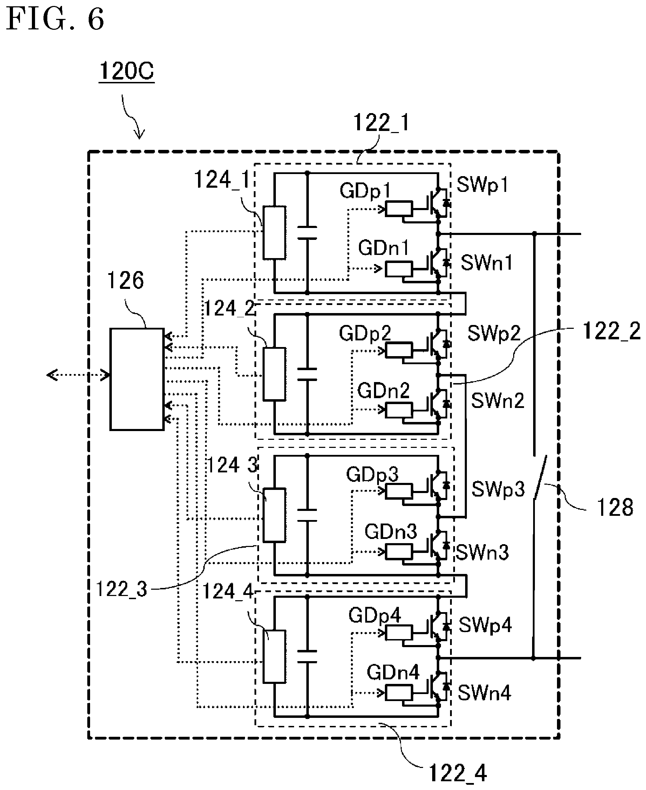

In FIG. 6, difference from the configurations in FIG. 4 and FIG. 5 is connection parts between the unit converters. In FIG. 6, an AC terminal of the unit converter 122_1 located at one end in a unit converter group 120C is one terminal of the unit converter group 120C. An N terminal of the unit converter 122_1 is connected to a P terminal of the unit converter 122_2, an AC terminal of the unit converter 122_2 is connected to an AC terminal of the unit converter 122_3, and an N terminal of the unit converter 122_3 is connected to a P terminal of the unit converter 122_4. An AC terminal of the unit converter 122_4 located at another end in the unit converter group 120C is another terminal of the unit converter group 120C. As in FIG. 4 and FIG. 5, a bypass switch 128 is provided between the terminals of the unit converter group 120, i.e., between the AC terminal of the unit converter 122_1 and the AC terminal of the unit converter 122_4.

Each unit converter group 120_k composing the arm 12 shown in FIG. 2 is any of the unit converter groups A, B, C shown in FIG. 4 to FIG. 6, and it is desirable that the same kind and the same number of unit converter groups are provided in the arms 12 and in the power conversion device.

### <Configuration of gate control section 126>

Next, the gate control section 126 included in the unit converter group 120 will be described.

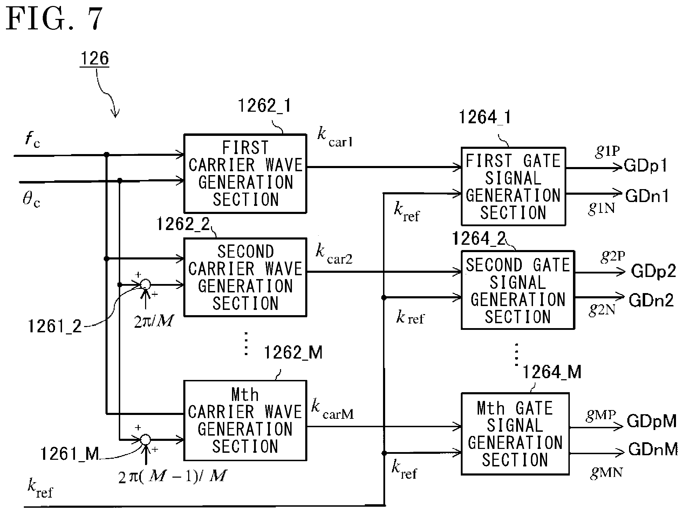

FIG. 7 is a function block diagram showing the configuration of the gate control section 126 according to embodiment 1. The gate control section 126 includes M gate signal generation sections 1264 respectively corresponding to the M unit converters 122 in the unit converter group (each gate signal generation section is referred to as a gate signal generation section 1264_i, and when the gate signal generation sections are collectively mentioned, they are referred to as gate signal generation sections 1264), and carrier wave generation sections 1262 which generate carrier waves for generating gate signals (each carrier wave generation section is referred to as a carrier wave generation section 1262_i, and when the carrier wave generation sections are collectively mentioned, they are referred to as carrier wave generation sections 1262). The ith gate signal generation section 1264_i generates gate signals giP, giN to be transmitted to the gate drivers GDpi, GDni of the ith unit converter 122_i, and the ith carrier wave generation section 1262_i transmits a triangular carrier wave k_{car}i to the ith gate signal generation section 1264_i.

The ith carrier wave generation section 1262_i generates the triangular carrier wave k_{car}i on the basis of the carrier wave frequency fc and the carrier wave reference phase θc received from the control device 20. Adders 1261 are provided at stages before the second carrier wave generation section 1262_2 to the Mth carrier wave generation section 1262_M. The second carrier wave generation section 1262_2 receives a carrier wave reference phase θc + 2π/M through the adder 1261_2, and thus generates a triangular carrier wave k_{car}2 with a phase delayed by 2π/M from the first carrier wave generation section 1262_1. Sequentially, the triangular carrier waves k_{car}i with phases each shifted by 2π/M are generated. That is, the triangular carrier waves k_{car}i with phases all different from each other are transmitted to the M unit converters 122 in the unit converter group 120. Hereinafter, generation of carrier waves with phases each shifted by 2π/M is referred to as phase shift.

The ith gate signal generation section 1264_i compares the arm modulation command k_{ref} received from the control device 20 and the triangular carrier wave k_{car}i received from the ith carrier wave generation section 1262_i, and outputs the gate signals giP, giN to the respective gate drivers GDpi, GDni so that, if the arm modulation command k_{ref} is greater, voltage outputted from the ith unit converter 122_i becomes the capacitor voltage vci, and if the arm modulation command k_{ref} is smaller, voltage outputted from the ith unit converter 122_i becomes 0.

That is, for the unit converters 122_1, 122_2, 122_3, 122_4 in the unit converter group 120A shown in FIG. 4 and the unit converters 122_1, 122_3 in the unit converter group 120C shown in FIG. 6, the ith gate signal generation section 1264_i compares the arm modulation command k_{ref} received from the control device 20 and the triangular carrier wave k_{car}i received from the ith carrier wave generation section 1262_i. Then, the ith gate signal generation section 1264_i outputs the gate signal giP to the gate driver GDpi so as to turn on the P-side semiconductor switching element of the ith unit converter 122_i if the arm modulation command k_{ref} is greater. Meanwhile, the ith gate signal generation section 1264_i outputs the gate signal giN to the gate driver GDni so as to turn on the N-side semiconductor switching element of the ith unit converter 122_i if the arm modulation command k_{ref} is smaller.

For the unit converters 122_1, 122_2, 122_3, 122_4 in the unit converter group 120B shown in FIG. 5 and the unit converters 122_2, 122_4 in the unit converter group 120C shown in FIG. 6, the ith gate signal generation section 1264_i compares the arm modulation command k_{ref} received from the control device 20 and the triangular carrier wave k_{car}i received from the ith carrier wave generation section 1262_i. Then, the ith gate signal generation section 1264_i outputs the gate signal giN to the gate driver GDni so as to turn on the N-side semiconductor switching element of the ith unit converter 122_i if the arm modulation command k_{ref} is greater. Meanwhile, the ith gate signal generation section 1264_i outputs the gate signal giP to the gate driver GDpi so as to turn on the P-side semiconductor switching element of the ith unit converter 122_i if the arm modulation command k_{ref} is smaller.

The gate control section 126 shown in FIG. 7 is configured under the premise that variations in the capacitor voltages vci of the unit converters 122 included in the unit converter group 120 are small, and outputs gate signals generated using the arm modulation command k_{ref}, to the unit converters 122.

In a case where there are variations in the capacitor voltages vci of the unit converters 122 included in the unit converter group 120, it is desirable that the arm modulation command k_{ref} is corrected using the arm current detection value iₐᵣₘ and a deviation between the capacitor voltage vci and a capacitor voltage average value vcₐᵣₘ in the arm so that the capacitor voltage vci becomes close to the capacitor voltage average value vcₐᵣₘ in the arm, and the corrected command is outputted as a modulation command k_{ref}i for each unit converter to the gate signal generation section 1264_i.

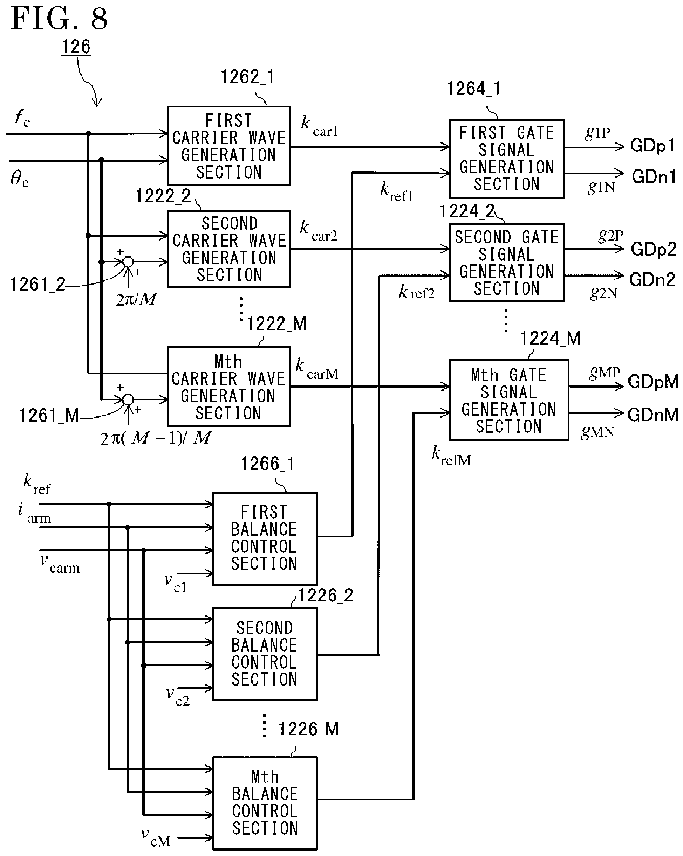

FIG. 8 is a function block diagram showing another configuration of the gate control section 126 according to embodiment 1. In FIG. 8, the gate control section 126 further includes balance control sections 1266. The ith balance control section 1266_i receives the arm modulation command k_{ref} transmitted from the control device 20, the capacitor voltage average value vcₐᵣₘ in the arm, the arm current detection value iₐᵣₘ, and the capacitor voltage vci received from the unit converter 122_i. Then, the ith balance control section 1266_i calculates a modulation command balance correction amount corresponding to the unit converter so that the capacitor voltage vci becomes close to the capacitor voltage average value vcₐᵣₘ in the arm, and adds the modulation command balance correction amount to the arm modulation command k_{ref}. The corrected arm modulation command is transmitted as the modulation command k_{ref}i for the unit converter to the ith gate signal generation section 1264_i. Here, the balance control sections 1266 whose number is equal to the number of the unit converters 122 are provided correspondingly to the unit converters 122 in the unit converter group 120.

In FIG. 8, the ith gate signal generation section 1264_i compares the modulation command k_{ref}i transmitted from the ith balance control section 1266_i and the triangular carrier wave k_{car}i transmitted from the ith carrier wave generation section 1262_i. In the same manner as described in FIG. 7, the ith gate signal generation section 1264_i outputs the gate signals giP, giN to the gate drivers GDpi, GDni so that, if the arm modulation command k_{ref} is greater, voltage outputted from the ith unit converter 122_i becomes the capacitor voltage vci, and if the arm modulation command k_{ref} is smaller, voltage outputted from the ith unit converter 122_i becomes 0.

Since the gate control section 126 is provided for each unit converter group 120, it suffices that the control device 20 sends data of the arm modulation command k_{ref}, the arm current detection value iₐᵣₘ, and the capacitor voltage average value vcₐᵣₘ in the arm, for each unit converter group 120. Thus, the transmission data amount can be reduced as compared to the conventional case. That is, the data amount can be significantly reduced as compared to a case of transmitting data for each of gate drivers of unit converters.

### <Description of operation of phase shift>

Next, phase shift of the carrier wave to be inputted to the gate signal generation section 1264 will be described. The number M of the unit converters in the unit converter group 120 is determined in advance and does not change during operation of the power conversion device. Therefore, a value of 2π/M [rad] is stored in the gate control section 126 in advance, and each carrier wave generation section 1262 can generate a reference phase for the carrier wave on the basis of the carrier wave reference phase θc received from the control device 20. Here, 2π/M is a value obtained by dividing one cycle (2π) of the carrier wave by the number M of the unit converters in the unit converter group 120, i.e., π/M is a value obtained by equally dividing one cycle (2π) of the carrier wave by the number M of the unit converters in the unit converter group 120.

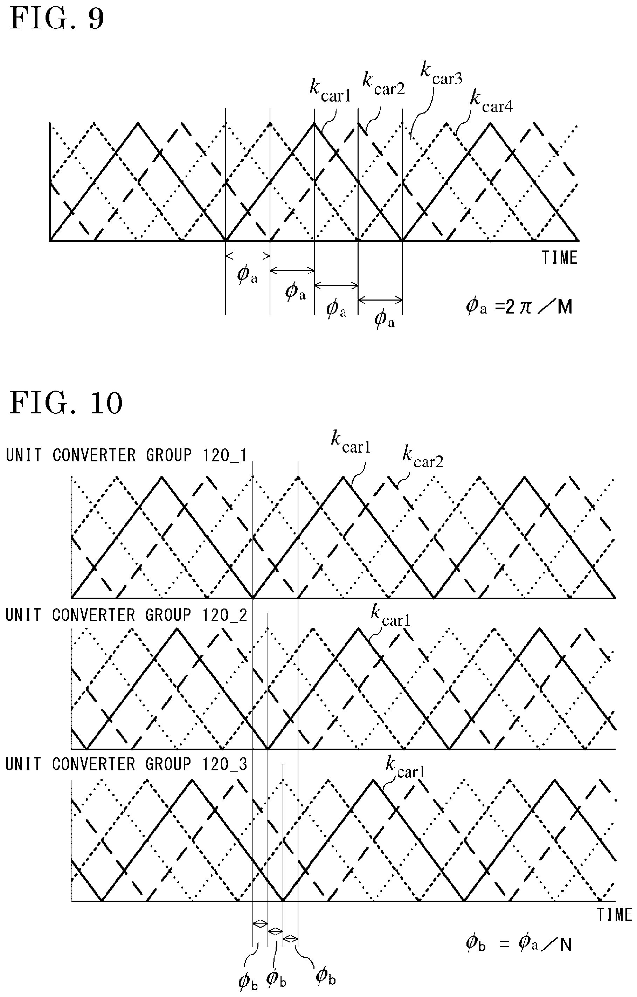

FIG. 9 is a waveform diagram of the triangular carrier waves k_{car}i and illustrates phase shift of the carrier waves in a case where the number M of the unit converters in the unit converter group is 4. In FIG. 9, among the triangular carrier waves k_{car}i, the triangular carrier wave generated by the first carrier wave generation section 1262_1 is denoted with i = 1, and the remaining triangular carrier waves are sequentially denoted up to i = 4. As described above, each ith carrier wave generation section 1262_i generates the triangular carrier wave k_{car}i on the basis of the carrier wave frequency fc and the carrier wave reference phase θc received from the control device 20, and a phase difference φa among the triangular carrier waves k_{car}i is 2π/M. Regarding each triangular carrier wave k_{car}i having a different phase, since a value of 2π/M [rad] is stored in the gate control section 126 in advance on the basis of the number M of the unit converters in the unit converter group 120, each carrier wave generation section 1262 can easily generate a reference phase for the carrier wave on the basis of the carrier wave reference phase θc received from the control device 20. Thus, the amount of data transmitted from the control device 20 can be reduced.

Next, phase shift of carrier waves in a case where there are three unit converter groups 120 in the arm 12 (N = 3) will be described with reference to FIG. 10.

FIG. 10 is a waveform diagram of the triangular carrier waves k_{car}i and illustrates phase shift of the carrier waves in a case where the number N of the unit converter groups in the arm 12 is 3. Each unit converter group includes four unit converters, as in FIG. 9. From the top, waveforms of the triangular carrier waves k_{car}i for the first unit converter group 120_1, the second unit converter group 120_2, and the third unit converter group 120_3 are shown. Focusing on the waveforms of the triangular carrier waves k_{car}1 generated by the first carrier wave generation sections in the respective unit converter groups, a phase difference among the unit converter groups is φb. The phase difference φb is a value obtained by dividing a first phase shift amount φa (= 2π/M [rad]) in the unit converter group by the number N of the unit converter groups in the arm, and therefore is a value obtained by equally dividing φa by N. That is, the triangular carrier wave k_{car}i generated by the carrier wave generation section in the arm has a phase difference obtained by equally dividing 360° (= 2π) by the total number (M×N) of the unit converters in the arm. Thus, harmonics that would occur when the carrier waves have the same phase can be prevented from occurring.

The number N of the unit converter groups in the arm is determined in advance and does not change during operation of the power conversion device. Therefore, if a second phase shift amount φb (= φa/N [rad]) is stored in the gate control section 126 together with the first phase shift amount φa (= 2π/M [rad]) in advance, each carrier wave generation section 1262 in the arm can generate a reference phase for the carrier wave on the basis of the carrier wave reference phase θc received from the control device 20. Thus, the amount of data transmitted from the control device 20 can be reduced.

In a case where any of the unit converter groups 120 has failed or has become abnormal, or in a case where any of the unit converters 122 in the unit converter group 120 has failed or has become abnormal and thus the bypass switch 128 of the unit converter group including the unit converter 122 that has failed or has become abnormal is turned on, it suffices that the phase shift amount among the unit converter groups is changed in consideration of the number of the unit converter groups for which the bypass switches 128 are turned on. That is, in a case where the bypass switch 128 is turned on in one unit converter group, φb can be easily changed to a new value as φa/(N - 1). At this time, the first phase shift amount φa in the unit converter group need not be changed, and therefore the number of data to be changed can be reduced.

As described above, the power conversion device according to the present embodiment 1 is configured as the MMC including: the power converter 10 that includes a plurality of arms each having a plurality of (N) unit converter groups 120 which are connected in series and in each of which a plurality of (M) unit converters 122 are connected and the gate control section 126 is provided; and the control device 20 which controls the power converter 10. Phases for the triangular carrier waves k_{car}i as references for generating gate signals for performing ON/OFF control of the semiconductor switching elements of the unit converters 122 are generated so as to be all shifted from each other among the semiconductor switching elements of the plurality of unit converters 122 composing each arm. Thus, voltage and current with reduced harmonic distortion can be outputted. In each unit converter group 120, the carrier wave generation sections 1262 of the gate control section 126 can easily generate reference phases sequentially shifted by 2π/M on the basis of the carrier wave reference phase θc received from the control device 20, and the triangular carrier waves k_{car}i having phases shifted from each other by 2π/M are sequentially transmitted to the gate signal generation sections 1264. Among the unit converter groups 120, reference phases shifted from each other by a phase obtained by dividing 2π/M by the number N of the unit converter groups are generated. Therefore, the control device 20 transmits the carrier wave reference phase θc for each phase, and on the basis of the transmitted carrier wave reference phase θc, triangular carrier waves having different phases can be generated for the unit converters in the arm via a small number of signals, using the number M of the unit converters 122 and the number N of the unit converter groups 120 which are determined in advance. Thus, it becomes possible to output voltage and current with reduced harmonic distortion, using a simple configuration, without size increase of the control device 20.

Decrease in the number of signals is not limited to that for the carrier wave reference phase θc. Since the gate control section 126 is provided for each unit converter group 120, it suffices that the control device 20 sends data of the arm modulation command k_{ref}, the arm current detection value iₐᵣₘ, and the capacitor voltage average value vcₐᵣₘ in the arm, for each unit converter group 120. Thus, the transmission data amount can be reduced as compared to the conventional case. That is, the data amount can be significantly reduced as compared to a case of transmitting data for each of gate drivers of unit converters, and occurrence of delay of data and the like can be suppressed.

Since the gate control section 126 is provided for each unit converter group 120, it is possible to perform maintenance and a test for each unit converter group 120.

In FIG. 9 and FIG. 10, the examples in which the carrier waves are triangular waves have been shown. However, the carrier waves are not limited to triangular waves and may be saw-tooth waves or the like.

### Embodiment 2

Hereinafter, a power conversion device according to embodiment 2 will be described with reference to the drawings.

Regarding the power conversion device according to embodiment 2, it is assumed that the number of the unit converters included in each unit converter group is 2 (M = 2) as an example, and a carrier wave generation method and a configuration of the unit converter group different from those in embodiment 1 will be described.

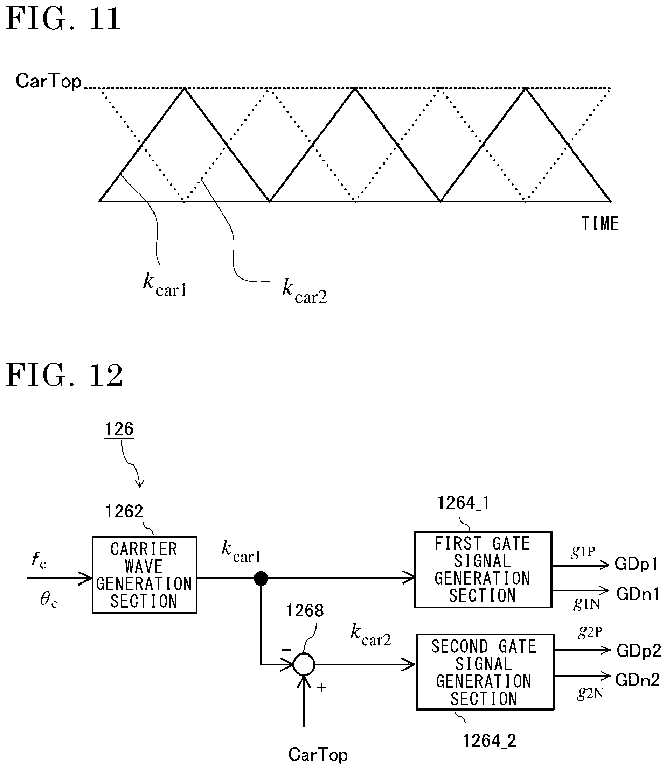

FIG. 11 is a waveform diagram of the triangular carrier waves k_{car}i and illustrates phase shift of carrier waves in a case where the number of the unit converters in the unit converter group 120 is 2. FIG. 11 corresponds to a case where M is set at 2 in FIG. 9. In a case where the number M of the unit converters is 2, the two carrier waves are triangular carrier waves with phases shifted from each other by 180° (π) which is a half cycle. Therefore, the second carrier wave k_{car}2 can be generated by subtracting the value of the first carrier wave k_{cal}1 from a top value CarTop of the triangular carrier wave.

FIG. 12 shows the configuration of the gate control section 126 in the unit converter group 120 in the power conversion device according to embodiment 2. As compared to FIG. 7 and FIG. 8, in FIG. 12, two carrier wave generation sections whose number is equal to the number M of the unit converters are not provided in the unit converter group, and it suffices that one carrier wave generation section 1262 is provided. In FIG. 12, the carrier wave generation section 1262 generates the triangular carrier wave k_{car}1 on the basis of the carrier wave frequency fc and the carrier wave reference phase θc transmitted from the control device 20. The generated triangular carrier wave k_{car}1 is transmitted to the first gate signal generation section 1264_1 and is inputted to an adder 1268 so as to be subtracted from the top value CarTop of the triangular carrier wave. The triangular carrier wave k_{car}2 outputted from the adder 1268 has a phase shifted by 180° from the triangular carrier wave k_{car}1, and is transmitted to the second gate signal generation section 1264_2.

In the present embodiment 2, in a case where there are variations in the capacitor voltages vci of the unit converters 122 of the unit converter group 120, it is desirable that the arm modulation command k_{ref} is corrected using the arm current detection value iₐᵣₘ and a deviation between the capacitor voltage vci and a capacitor voltage average value vcₐᵣₘ in the arm so that the capacitor voltage vci becomes close to the capacitor voltage average value vcₐᵣₘ in the arm, and the corrected command is outputted as a modulation command k_{ref}i for each unit converter to the gate signal generation section 1264_i. That is, also in FIG. 12, a configuration having the balance control section 1266 as in FIG. 8 may be adopted.

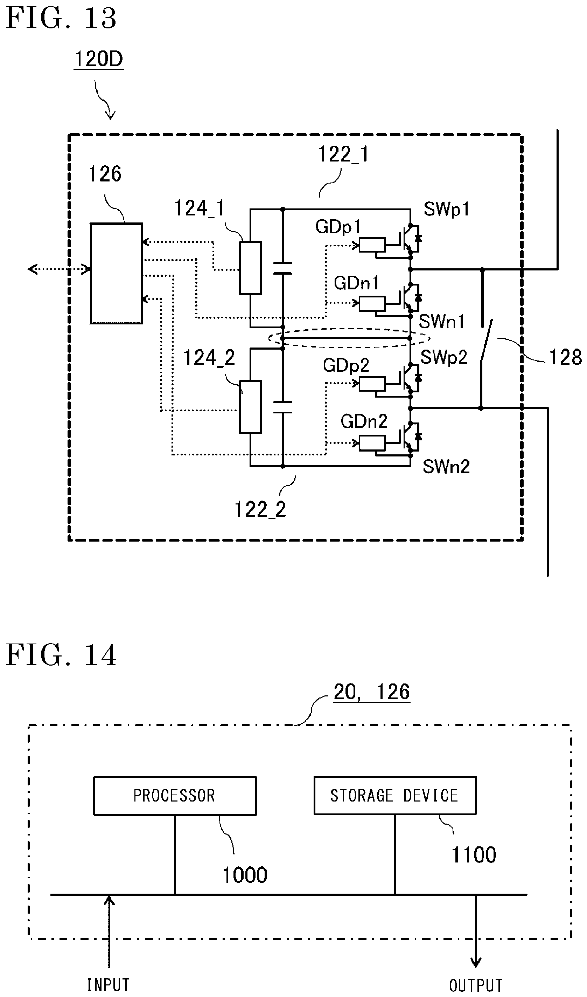

Next, in the example in which the number of the unit converters included in the unit converter group is 2 (M = 2), a configuration of the unit converter group different from that shown in embodiment 1 will be described with reference to FIG. 13.

In FIG. 13, in a unit converter group 120D, an N terminal of the unit converter 122_1 is connected to a P terminal of the unit converter 122_2, as indicated by a broken-line elliptic part. That is, parts that are not AC terminals share a common potential, whereby the device size can be reduced. The other configurations are the same as those in FIG. 4 to FIG. 6 in embodiment 1 and therefore the description thereof is omitted.

As described above, with the power conversion device according to embodiment 2, the effects of embodiment 1 are provided, and in addition, in a case where the number of the unit converters 122 included in the unit converter group 120 is 2, the gate control section 126 of each unit converter group 120 need not have two carrier wave generation sections 1262 whose number is equal to the number of the unit converters 122 but it suffices that one carrier wave generation section 1262 is provided and calculation by the adder 1268 is performed. Thus, the device configuration is simplified and the calculation amount is reduced.

In a case where the number of the unit converters included in the unit converter group is 2 (M = 2), parts that are not AC terminals can share a common potential in the configuration inside the unit converter group, leading to further device size reduction.

Thus, it becomes possible to provide a power conversion device that has a modular multilevel converter (MMC) adaptable to large-capacity power conversion and can output voltage and current with reduced harmonic distortion, using a simple configuration, without size increase of a control device.

FIG. 14 shows an example of a hardware configuration of the control device 20 according to each of embodiments 1 and 2 described above. As shown in FIG. 14, the control device 20 includes a processor 1000 and a storage device 1100 as processing circuits, for example.

The processor 1000 may be formed by a central processing unit (CPU), an application specific integrated circuit (ASIC), an integrated circuit (IC), a field programmable gate array (FPGA), various logic circuits, various signal processing circuits, and the like. A plurality of processors 1000 that are the same type or different types may be provided and may execute processing in a shared manner. The storage device 1100 includes a random access memory (RAM) that allows data to be read or written from the processor 1000, and a read only memory (ROM) that allows data to be read from the processor 1000. The processor 1000 executes a program inputted from the storage device 1100 such as a ROM.

The gate control section 126 also has the hardware configuration shown in FIG. 14 as in the control device 20, and executes a program for generating signals for performing drive control of the gates.

### <Other embodiments>

(1) In the above description, the example in which the semiconductor switching elements SWp, SWn as the switching elements composing the unit converter 122 are insulated gate bipolar transistors (IGBTs), has been shown. However, metal oxide semiconductor field effect transistors (MOSFETs) may be used.
(2) The semiconductor switching elements are not limited to those made of a Si (silicon) semiconductor, and may be made of a wide bandgap semiconductor such as SiC (silicon carbide) or GaN (gallium nitride). The wide bandgap semiconductor has such characteristics that allow higher-speed switching, allow high-temperature operation, and exhibit a high dielectric-breakdown electric field strength, for example, and therefore is preferably applied to the MMC.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

1 AC power supply
2 current sensor
3 voltage sensor
4 transformer
6P positive-side DC terminal
6N negative-side DC terminal
10 power converter
12, 12pu, 12nu, 12pv, 12nv, 12pw, 12nw arm
14p, 14n voltage sensor
20 control device
12L reactor
12di current sensor
120, 120_1, 120_2, 120_3, 120_k, 120_N, 120A, 120B, 120C, 120D unit converter group
122, 122_1, 122_2, 122_3, 122_4, 122_i unit converter
124, 124_1 voltage sensor
126 gate control section
128 bypass switch
1261, 1261_2, 1268 adder
1262, 1262_1, 1262_2, 1262_i, 1262_M carrier wave generation section
1264, 1264_1, 1264_2, 1264_i gate signal generation section
1266, 1266_i balance control section
1000 processor
1100 storage device
Vac AC voltage
Vdc DC voltage
Iac AC current
vc voltage value of capacitor
k_{ref}, k_{ref}i arm modulation command
vcₐᵣₘ capacitor voltage average value in arm
iₐᵣₘ arm current detection value
θc carrier wave reference phase
fc carrier wave frequency
k_{car}1, k_{car}2, k_{car}i triangular carrier wave
GDpi, GDni gate driver
giP, giN gate signal
SWp, SWpi, SWn, SWni semiconductor switching element
u, v, w connection point
φa first phase shift amount
φb second phase shift amount

## Claims

1. A power conversion device comprising:
a power converter including a plurality of arms each having a plurality of unit converter groups connected in series, each unit converter group having a plurality of unit converters connected to each other; and
a control device which controls the power converter, wherein
each unit converter includes a series body having two switching elements connected in series, and a capacitor connected in parallel to the series body,
each unit converter group includes a gate control section which generates gate signals for performing ON/OFF control of a plurality of the switching elements in the unit converter group,
the gate control section includes a carrier wave generation section which generates a plurality of carrier waves corresponding to a number of the unit converters in the unit converter group, and a gate signal generation section which compares a modulation command received from the control device and each carrier wave generated by the carrier wave generation section, and generates the gate signals on the basis of a result of the comparison, and
the plurality of carrier waves to be generated by the carrier wave generation section are generated such that phases thereof are each shifted by a first phase shift amount which is a value obtained by equally dividing one cycle of the carrier waves by the number of the unit converters in the unit converter group, using a carrier wave reference phase received from the control device as a reference, and among the unit converter groups in each arm, the phases are each shifted by a second phase shift amount which is a value obtained by equally dividing the first phase shift amount by a number of the unit converter groups in the arm, using the carrier wave reference phase received from the control device as a reference.

2. The power conversion device according to claim 1, wherein
each unit converter group includes one bypass switch,
the bypass switch is connected between a terminal of the unit converter located at one end in the unit converter group and a terminal of the unit converter located at another end,
in a case where any of the unit converters in the unit converter group has failed or has become abnormal, the bypass switch of the unit converter group including the unit converter that has failed or has become abnormal is turned on, and
the second phase shift amount is calculated using a number obtained by subtracting, from the number of the unit converter groups, a number of the unit converter groups for which the bypass switches are turned on, in the arm.

3. The power conversion device according to claim 1 or 2, wherein
the unit converter group includes two said unit converters,
a first carrier wave which is one of two said carrier waves generated by the carrier wave generation section is a triangular wave generated on the basis of a carrier wave frequency and the carrier wave reference phase received from the control device, and
a second carrier wave which is the other carrier wave is generated by subtracting a value of the first carrier wave from a top value of the first carrier wave.

4. The power conversion device according to claim 3, wherein
in the unit converter group, an N terminal of one of the two unit converters and a P terminal of the other unit converter are connected as a common terminal.

5. The power conversion device according to any one of claims 1 to 4, wherein
the unit converter includes a voltage sensor for detecting voltage of the capacitor of the unit converter,
the gate control section further includes balance control sections whose number corresponds to a number of the unit converters included in the unit converter group,
correspondingly to the respective unit converters, each of the balance control sections outputs a modulation command balance correction amount obtained by comparing the voltage of the capacitor of the unit converter and a voltage average value of the capacitors in the arm, and calculates a corrected modulation command obtained by adding the modulation command balance correction amount to the modulation command received from the control device, and
the gate signal generation section compares the corrected modulation command and each carrier wave, and outputs the gate signals on the basis of a result of the comparison.

6. The power conversion device according to any one of claims 1 to 5, wherein
one said gate control section is provided for each unit converter group.
